# EUROPEAN PATENT APPLICATION

(11) **EP 4 847 268 A1**
(43) Date of publication of application: **02.12.2026**
(21) Application number: 26181659.9
(22) Date of filing: 28.05.2026
(51) Int. Cl.: B41J 29/393, G03G 15/00, G06F 1/26, H04N 1/00

(54) **PRINTING DEVICE**

(30) Priority: 29.05.2025 JP 2025090008
(71) Applicant: Brother Kogyo Kabushiki Kaisha, Nagoya-shi, Aichi 467-8561 (JP)
(72) Inventor: ISODA, Yasukichi, Nagoya, 467-8562 (JP)
(74) Representative: J A Kemp LLP

(57) **Abstract**

A printing device includes a conveying unit, a print engine, a signal generation circuit, a connector, and a current limiting circuit. The conveying unit is configured to convey a printing medium. The print engine is configured to print on the printing medium conveyed by the conveying unit. The signal generation circuit is configured to generate a drive signal for driving the conveying unit and generate a drive signal for driving the print engine. The connector is compliant with a Universal Serial Bus Power Delivery (USB-PD) standard. The current limiting circuit is disposed between the connector and the signal generation circuit. The current limiting circuit is configured to limit a current flowing from the connector to the signal generation circuit.

## Description

The present disclosure relates to a printing device supporting the USB PD standard.

Japanese Patent Application Publication No. 2020-138413 discloses an image recording device including a current limiting circuit. In the image recording device, a controller performs control to supply a drive current to a conveying motor through the current limiting circuit when a predetermined condition is met. The image recording device corresponds to a printing device. The Universal Serial Bus Power Delivery (USB PD) standard is known as a standard for power supply via a communication cable.

In an electronic device supporting the Universal Serial Bus (USB) standard, when the electronic device consumes more current than can be supplied from an external power source, power supply from the power source may be stopped. In a printing device supporting the USB standard, when the printing device consumes more current than can be supplied from a power source, power supply from the power source may be stopped. When the power supply is stopped, ongoing printing by the printing device is interrupted. In known approaches, current that can be supplied from a power source is not taken into consideration, and therefore, stoppage of power supply or interruption of printing may occur.

In view of the foregoing, it is an object of the present disclosure to provide a printing device supporting the USB-PD standard in which ongoing printing is less likely to be interrupted.

In order to attain the above and other objects, according to Aspect 1, the present disclosure provides a printing device including a conveying unit, a print engine, a signal generation circuit, a connector, and a current limiting circuit. The conveying unit is configured to convey a printing medium. The print engine is configured to print on the printing medium conveyed by the conveying unit. The signal generation circuit is configured to generate a drive signal for driving the conveying unit and generate a drive signal for driving the print engine. The connector is compliant with a Universal Serial Bus Power Delivery (USB-PD) standard. The current limiting circuit is disposed between the connector and the signal generation circuit. The current limiting circuit is configured to limit a current flowing from the connector to the signal generation circuit.

In the above configuration, the current limiting circuit limits the current flowing from the connector to the signal generation circuit. Therefore, the printing device 1 can reduce the likelihood that more current than can be supplied from a power source connected to the printing device via the connector flows into the printing device. Accordingly, ongoing printing is less likely to be interrupted in the printing device, which supports the USB PD standard.

According to Aspect 2, in the printing device of Aspect 1, the signal generation circuit and the current limiting circuit are disposed on the same circuit board.

According to Aspect 3, in the printing device of Aspect 2, the connector is disposed on the same circuit board as the signal generation circuit and the current limiting circuit.

According to Aspect 4, in the printing device of Aspect 1, the signal generation circuit and the current limiting circuit are disposed on different circuit boards.

According to Aspect 5, in the printing device of Aspect 1 or 4, the connector is disposed on the same circuit board as the current limiting circuit.

According to Aspect 6, in the printing device of any one of Aspects 1 to 5, the current limiting circuit includes a buck-boost circuit and a buck-boost control circuit. The buck-boost circuit has an input terminal and an output terminal. The buck-boost circuit is configured to: step up a first voltage applied to the input terminal and output the stepped-up first voltage from the output terminal as a second voltage; and step down the first voltage applied to the input terminal and output the stepped-down first voltage from the output terminal as the second voltage. The buck-boost control circuit is configured to control the buck-boost circuit.

According to Aspect 7, in the printing device of Aspect 6, the buck-boost circuit includes an inductor, a first switch, a second switch, a third switch, and a fourth switch. The inductor has an input-side terminal and an output-side terminal. The first switch is disposed between the input terminal and the input-side terminal. The second switch is disposed between the input-side terminal and a predetermined node. The third switch is disposed between the output terminal and the output-side terminal. The fourth switch is disposed between the output-side terminal and the predetermined node. The buck-boost control circuit is configured to perform the following to step up the first voltage: setting the first switch to a conductive state; setting the second switch to a non-conductive state; and switching the third switch and the fourth switch between a conductive state and a non-conductive state in a complementary manner. The buck-boost control circuit is configured to perform the following to step down the first voltage: setting the third switch to a conductive state; setting the fourth switch to a non-conductive state; and switching the first switch and the second switch between a conductive state and a non-conductive state in a complementary manner.

According to Aspect 8, in the printing device of Aspect 6 or 7: the current limiting circuit further includes a current detection circuit configured to detect a current flowing between the output terminal and the signal generation circuit; and the buck-boost control circuit is configured to, when the current detected by the current detection circuit is greater than or equal to a predetermined value, perform an operation to reduce the current flowing between the output terminal and the signal generation circuit.

According to Aspect 9, in the printing device of any one of Aspects 1 to 5, the current limiting circuit includes a boost circuit and a boost control circuit. The boost circuit has an input terminal and an output terminal. The boost circuit is configured to step up a first voltage applied to the input terminal and output the stepped-up first voltage from the output terminal as a second voltage. The boost control circuit is configured to control the boost circuit.

According to Aspect 10, in the printing device of Aspect 9, the boost circuit includes an inductor, a first switch, and a second switch. The inductor has an input-side terminal and an output-side terminal. The input-side terminal is connected to the input terminal. The first switch is disposed between the output terminal and the output-side terminal. The second switch is disposed between the output-side terminal and a predetermined node. The boost circuit is configured to switch the first switch and the second switch between a conductive state and a non-conductive state in a complementary manner to step up the first voltage.

According to Aspect 11, in the printing device of Aspect 9 or 10: the current limiting circuit further includes a current detection circuit configured to detect a current flowing between the output terminal and the signal generation circuit; and the boost control circuit is configured to, when the current detected by the current detection circuit is greater than or equal to a predetermined value, perform an operation to reduce the current flowing between the output terminal and the signal generation circuit.

According to Aspect 12, the printing device of any one of Aspects 1 to 11 further includes a load switch and a USB-PD control circuit. The load switch is disposed between the connector and the current limiting circuit. The USB-PD control circuit is configured to: perform, based on a voltage applied to the USB-PD control circuit via the connector, a voltage negotiation compliant with the USB-PD standard with a power source connected to the USB-PD control circuit via the connector; and control the load switch to be in a non-conductive state until the voltage negotiation is completed.

According to Aspect 13, the printing device of any one of Aspects 1 to 12 further includes an electrical energy storage unit. The electrical energy storage unit is disposed between the current limiting circuit and the signal generation circuit.

According to Aspect 14, in the printing device of Aspect 13, the electrical energy storage unit includes a capacitor.

According to Aspect 15, in the printing device of Aspect 13, the electrical energy storage unit includes a battery.
Fig. 1 is a perspective view of a printing device.
Fig. 2 is a schematic cross-sectional view of the printing device.
Fig. 3 is a block diagram of the printing device.
Fig. 4 is a diagram illustrating a power supply circuit of the printing device.
Figs. 5A to 5D are diagrams illustrating mounting configurations of the power supply circuit.
Figs. 6A and 6B are diagrams illustrating the operation of a current limiting circuit of the power supply circuit during a step-up mode.
Figs. 7A and 7B are diagrams illustrating the operation of the current limiting circuit of the power supply circuit during a step-down mode.
Fig. 8 is a diagram illustrating a current limiting circuit of a printing device.
Figs. 9A and 9B are diagrams illustrating the operations of the current limiting circuit.
Fig. 10 is a diagram illustrating an electrical energy storage unit of a printing device.

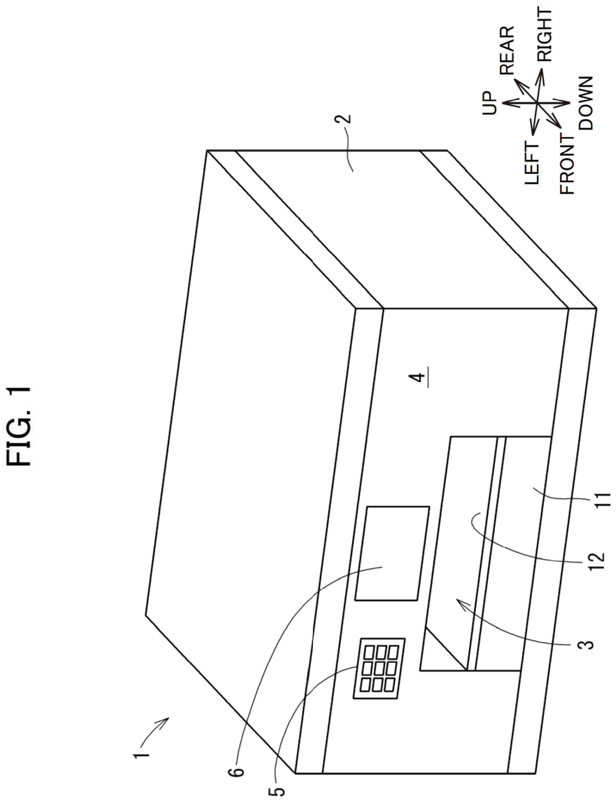

Hereinafter, embodiments of the present disclosure will be described while referring to the accompanying drawings. In the following description, an up-down direction is defined based on a state in which a printing device 1 is operably installed (the state illustrated in Fig. 1), a front-rear direction is defined based on a surface of the printing device 1 having an opening 3 being regarded as the front surface of the printing device 1 (the surface will be referred to as a front surface 4), and a left-right direction is defined when the printing device 1 is viewed from the front thereof.

### Overview of Printing Device 1

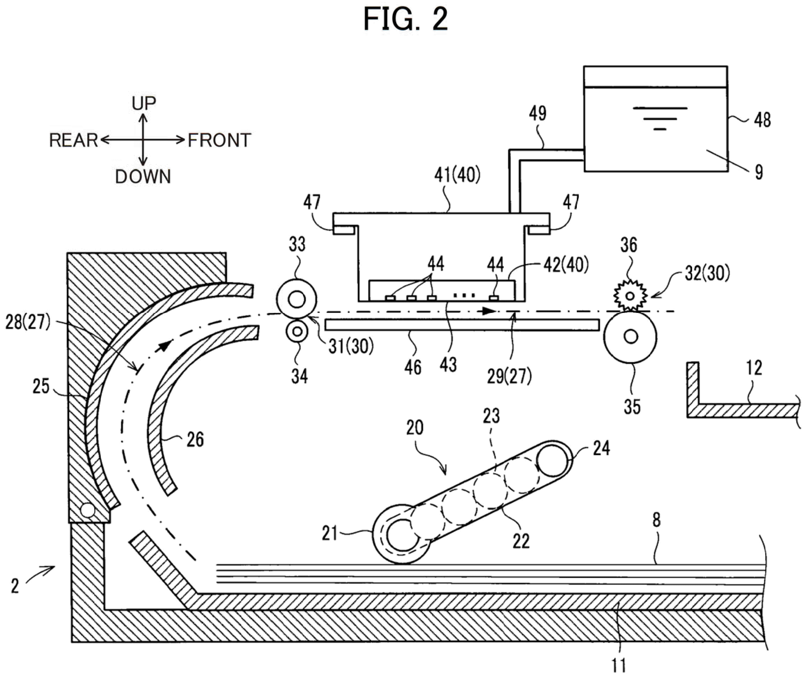

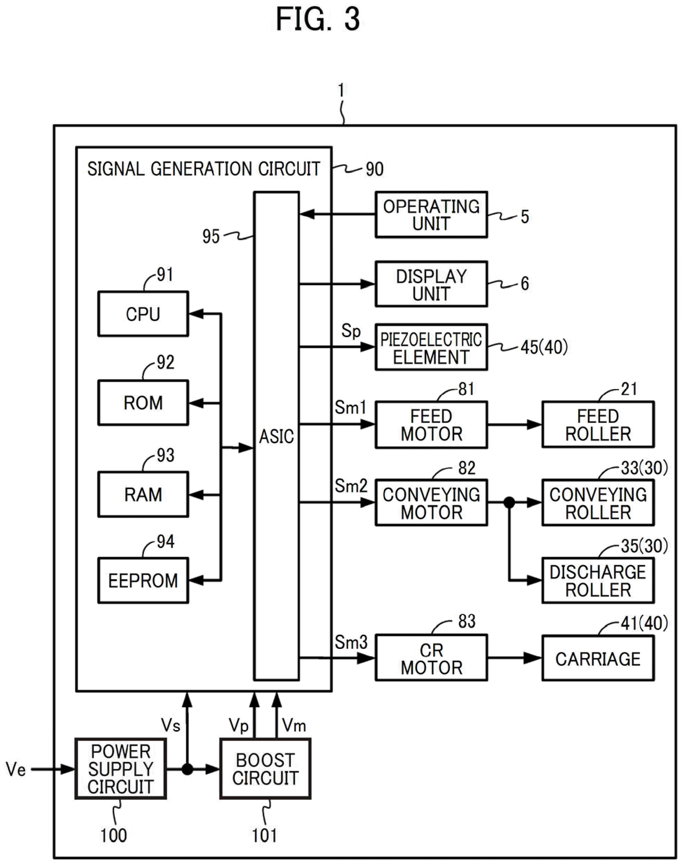

As illustrated in Fig. 1, the printing device 1 includes a housing 2 having a general rectangular parallelepiped shape. The housing 2 has the opening 3 on the front surface 4. The printing device 1 further includes an operating unit 5 and a display unit 6, which are located on the front surface 4 of the housing 2. As illustrated in Fig. 2, the printing device 1 further includes a feed tray 11, a discharge tray 12, a feed unit 20, an outer guide member 25, and an inner guide member 26, which are located inside the housing 2. The printing device 1 further includes a conveying unit 30, a print engine 40, and a platen 46, which are located inside the housing 2. As illustrated in Fig. 3, the printing device 1 further includes a signal generation circuit 90, a feed motor 81, a conveying motor 82, a carriage return (CR) motor 83, a power supply circuit 100, and a boost circuit 101.

### Feed Tray 11 and Feed Unit 20

As illustrated in Fig. 2, the feed tray 11 has a box shape that opens upward. The feed tray 11 accommodates therein one or more sheets 8. The sheets 8 are stacked in the up-down direction in the feed tray 11. The user can remove the feed tray 11 from the housing 2 through the opening 3 by moving the feed tray 11 frontward. The user can insert the feed tray 11 into the housing 2 through the opening 3 by moving the feed tray 11 rearward.

The feed unit 20 is located above the feed tray 11 inserted into the housing 2. The feed unit 20 includes a feed roller 21, a feed arm 22, a drive transmission mechanism 23, and a shaft 24. The feed roller 21 is provided on the distal end portion of the feed arm 22. The shaft 24 extends in the left-right direction and is provided on the base end portion of the feed arm 22.

The feed roller 21 is rotatably supported by the distal end portion of the feed arm 22. The feed arm 22 pivots about the shaft 24. The drive transmission mechanism 23 includes a plurality of gears. The drive transmission mechanism 23 transmits a drive force of the feed motor 81 illustrated in Fig. 3 to the feed roller 21. The feed roller 21 is driven to rotate by the drive force from the feed motor 81. As a result, the topmost sheet 8 of the stack of sheets 8 accommodated in the feed tray 11 is fed toward a conveying path 27.

### Conveying Path 27

The discharge tray 12 is located above the front portion of the feed tray 11. The conveying path 27 is a path along which the sheet 8 is conveyed from the feed tray 11 to the discharge tray 12. The conveying path 27 extends from the rear end of the feed tray 11. The conveying path 27 includes a curved section 28 and a linear section 29. The curved section 28 extends rearward and then frontward in a U-shape while extending upward. The linear section 29 extends frontward.

The outer guide member 25 and the inner guide member 26 face each other in the front-rear direction with a predetermined distance therebetween. The outer guide member 25 and the inner guide member 26 define the curved section 28. The print engine 40 and the platen 46 face each other in the up-down direction with a predetermined distance therebetween. The print engine 40 and the platen 46 define a portion of the linear section 29.

### Conveying Unit 30

The conveying unit 30 is configured to convey the sheet 8. The conveying unit 30 includes a pair of conveying rollers 31, and a pair of discharge rollers 32. The pair of conveying rollers 31 is positioned rearward of the print engine 40. One of the pair of conveying rollers 31 is a conveying roller 33, and the other of the pair of conveying rollers 31 is a pinch roller 34. The pinch roller 34 is positioned below the conveying roller 33. The pinch roller 34 is pressed against the conveying roller 33 by a resilient member such as a coil spring. The sheet 8 is an example of the printing medium.

The pair of discharge rollers 32 is positioned frontward of the print engine 40. One of the pair of discharge rollers 32 is a discharge roller 35, and the other of the pair of discharge rollers 32 is a spur roller 36. The spur roller 36 is positioned above the discharge roller 35. The spur roller 36 is pressed against the discharge roller 35 by a resilient member such as a coil spring.

The sheet 8 accommodated in the feed tray 11 is conveyed through the curved section 28 by the feed roller 21 and reaches the pair of conveying rollers 31. The pair of conveying rollers 31 nip the sheet 8 conveyed through the curved section 28. The conveying roller 33 is driven to rotate by a drive force from the conveying motor 82 illustrated in Fig. 3. When the conveying roller 33 rotates while the pair of conveying rollers 31 nip the sheet 8, the sheet 8 is conveyed onto the platen 46 by the pair of conveying rollers 31. The print engine 40 prints on the sheet 8 conveyed onto the platen 46.

The printed sheet 8 is conveyed through the linear section 29 by the pair of conveying rollers 31 and reaches the pair of discharge rollers 32. The pair of discharge rollers 32 nip the sheet 8 conveyed through the linear section 29. The discharge roller 35 is driven to rotate by the drive force from the conveying motor 82 illustrated in Fig. 3. When the discharge roller 35 rotates while the pair of discharge rollers 32 nip the sheet 8, the sheet 8 is conveyed onto the discharge tray 12 by the pair of discharge rollers 32.

### Print Engine 40

The print engine 40 is configured to print on the sheet 8 conveyed by the conveying unit 30. The print engine 40 is positioned above the platen 46. The print engine 40 includes a carriage 41 and a recording head 42. The printing device 1 further includes two guide rails 47, an ink tank 48, and a tube 49, which are located inside the housing 2.

The guide rails 47 are fixed to the housing 2 and are spaced apart from each other in the front-rear direction. The guide rails 47 extends in the left-right direction. The carriage 41 is mounted on the guide rails 47. The carriage 41 is driven by a drive force from the CR motor 83 illustrated in Fig. 3, thereby moving on the guide rails 47 in the left-right direction.

The recording head 42 is mounted on the carriage 41. The recording head 42 has a plurality of nozzles 44 in a bottom surface 43 of the recording head 42. The recording head 42 has piezoelectric elements 45 illustrated in Fig. 3. Each of the piezoelectric elements 45 corresponds to a respective one of the nozzles 44. The piezoelectric elements 45 are piezo elements, for example. Each of the piezoelectric elements 45 deforms a portion of an ink channel connected to the corresponding nozzle 44 to eject ink droplets downward from the corresponding nozzle 44.

The ink tank 48 stores ink 9. The tube 49 connects the recording head 42 and the ink tank 48 to each other. The ink 9 stored in the ink tank 48 is supplied to the recording head 42 through the tube 49.

### Signal Generation Circuit 90 and Its Periphery

The signal generation circuit 90 is configured to generate drive signals for driving the conveying unit 30 and generate drive signals for driving the print engine 40. As illustrated in Fig. 3, the signal generation circuit 90 includes a central processing unit (CPU) 91, a read-only memory (ROM) 92, a random-access memory (RAM) 93, an electrically erasable programmable read-only memory (EEPROM) 94, and an application-specific integrated circuit (ASIC) 95. The ROM 92 stores various programs to be executed by the CPU 91. The EEPROM 94 stores various data to be used when the CPU 91 executes the various programs. The RAM 93 is used as a storage area for temporarily storing various data to be used when the CPU 91 executes the various programs. The RAM 93 is also used as a working area into which the various programs and data are loaded.

When the printing device 1 is powered on, a program stored in the ROM 92 is copied and transferred to the RAM 93. The CPU 91 executes the program stored in the RAM 93, thereby causing the signal generation circuit 90 to generate the drive signals for driving the conveying unit 30 and generate the drive signals for driving the print engine 40.

The operating unit 5 and the display unit 6 are connected to the ASIC 95. The operating unit 5 includes operation keys. The operating unit 5 detects a pressed key among the operation keys, and outputs a signal corresponding to the pressed key. The signal generation circuit 90 identifies the pressed key based on the signal outputted from the operating unit 5. The display unit 6 displays information related to an operation of the printing device 1 on a screen based on instructions from the signal generation circuit 90.

The piezoelectric elements 45 are connected to the ASIC 95. The signal generation circuit 90 outputs drive signals Sp based on image data to the recording head 42 through the ASIC 95. The recording head 42 ejects ink from the nozzles 44 based on the drive signals Sp outputted from the signal generation circuit 90.

The feed motor 81, the conveying motor 82, and the CR motor 83 are connected to the ASIC 95. The ASIC 95 includes a built-in circuit for outputting drive signals to the conveying motor 81, the conveying motor 82, and the CR motor 83. The signal generation circuit 90 outputs a drive signal Sm1 to the feed motor 81 to drive the feed motor 81, thereby rotating the feed roller 21. The signal generation circuit 90 outputs a drive signal Sm2 to the conveying motor 82 to drive the conveying motor 82, thereby rotating the pair of conveying rollers 31 and the pair of discharge rollers 32. The signal generation circuit 90 outputs a drive signal Sm3 to the CR motor 83 to drive the CR motor 83, thereby moving the carriage 41.

### Power Supply Circuit 100

A power supply voltage Ve is applied to the printing device 1 from an external power source. The power supply circuit 100 outputs a supply voltage Vs based on the power supply voltage Ve. The boost circuit 101 generates a voltage Vp and a voltage Vm by stepping up the supply voltage Vs. The boost circuit 101 outputs the voltage Vp and the voltage Vm. The voltage Vp is to be used for driving the piezoelectric elements 45. The voltage Vm is to be used for driving the various motors. The supply voltage Vs, the voltage Vp, and the voltage Vm are applied to the signal generation circuit 90. The signal generation circuit 90 generates the drive signals Sp, the drive signal Sm1, the drive signal Sm2, and the drive signal Sm3 based on the supply voltage Vs, the voltage Vp, and the voltage Vm.

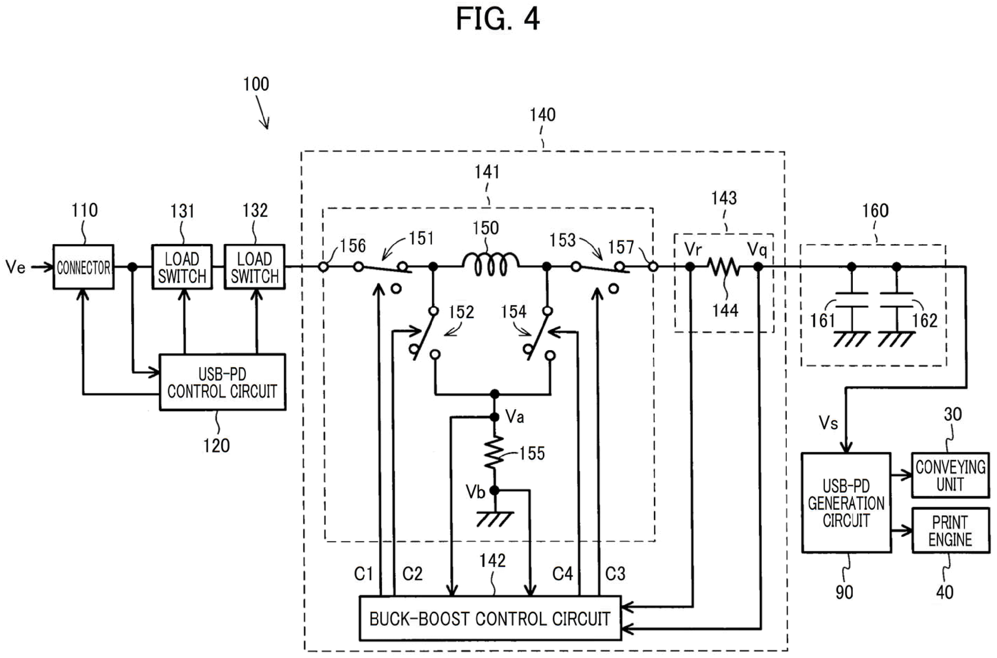

In the following description, the Universal Serial Bus Power Delivery (USB PD) will be sometimes referred to as "USB-PD". As illustrated in Fig. 4, the power supply circuit 100 includes a connector 110, a USB-PD control circuit 120, two load switches 131 and 132, a current limiting circuit 140, and an electrical energy storage unit 160.

The connector 110 is a connector compliant with the USB-PD standard. One end of a Universal Serial Bus (USB) cable is configured to be inserted into the connector 110. The other end of the USB cable is configured to be connected to the external power source. The external power source is, for example, an AC-DC power adapter that is compliant with the USB-PD standard and is plugged into an electrical outlet. The printing device 1 receives the power supply voltage Ve from the external power source connected to the printing device 1 through the USB cable.

The USB-PD control circuit 120 is a circuit for performing control compliant with the USB-PD standard. The USB-PD control circuit 120 is, for example, a commercially available USB-PD control integrated circuit (IC). The USB-PD control circuit 120 is connected to the connector 110, the load switch 131, and the load switch 132.

An initial power supply voltage is applied to the USB-PD control circuit 120 from the external power source via the connector 110. The USB-PD control circuit 120 is configured to perform a voltage negotiation compliant with the USB-PD standard with the external power source connected via the connector 110. The level of the power supply voltage Ve, which is applied to the printing device 1 from the external power source, is determined by the voltage negotiation.

The load switches 131 and 132 are connected in series between the connector 110 and the current limiting circuit 140. The load switches 131 and 132 each have a first conduction terminal, a second conduction terminal, and a control terminal. The first conduction terminal of the load switch 131 is connected to the connector 110. The second conduction terminal of the load switch 131 is connected to the first conduction terminal of the load switch 132. The second conduction terminal of the load switch 132 is connected to an input terminal of the current limiting circuit 140.

The USB-PD control circuit 120 has a first control signal output terminal and a second control signal output terminal. The first control signal output terminal of the USB-PD control circuit 120 is connected to the control terminal of the load switch 131. The second control signal output terminal of the USB-PD control circuit 120 is connected to the control terminal of the load switch 132. The USB-PD control circuit 120 outputs the same control signal from each of the first control signal output terminal and the second control signal output terminal.

The USB-PD control circuit 120 outputs a first-level controls signal from both the first control signal output terminal and the second control signal output terminal until the voltage negotiation with the external power source is completed. The first-level control signal is a control signal having a first level. The first-level control signal is, for example, a low-level signal. Each of the load switches 131 and 132 is in an off-state in a state where the first-level control signal is applied to the corresponding control terminal. When the load switches 131 and 132 are in the off-state, the power supply voltage Ve applied from the external power source is not applied to the current limiting circuit 140.

After the voltage negotiation with the external power source is completed, the USB-PD control circuit 120 outputs a second-level control signal from both the first control signal output terminal and the second control signal output terminal. The second-level control signal is a control signal having a second level. The second level control signal is, for example, a high-level signal. Each of the load switches 131 and 132 is in an on-state in a state where the second-level control signal is applied to the corresponding control terminal. When the load switches 131 and 132 are in the on-state, the power supply voltage Ve applied from the external power source is applied to the current limiting circuit 140.

### Current Limiting Circuit 140

The current limiting circuit 140 is configured to limit a current flowing from the connector 110 to the signal generation circuit 90. The current limiting circuit 140 is disposed between the connector 110 and the signal generation circuit 90. In the present disclosure, the expression "disposed between" refers to being arranged between two elements in terms of electrical connection.

The current limiting circuit 140 includes a buck-boost circuit 141, a buck-boost control circuit 142, and a current detection circuit 143. The buck-boost circuit 141 steps up and steps down the power supply voltage Ve applied from the external power source. The buck-boost circuit 141 is a switching regulator circuit. The buck-boost control circuit 142 is a control circuit for controlling the buck-boost circuit 141. The current detection circuit 143 includes a resistive element 144 and detects a current flowing between an output terminal 157 of the buck-boost circuit 141 and the signal generation circuit 90.

The buck-boost circuit 141 includes an inductor 150, switching elements 151 to 154, a resistive element 155, an input terminal 156, and the output terminal 157. The inductor 150 has an input-side terminal and an output-side terminal. The switching elements 151 to 154 each have a first conduction terminal, a second conduction terminal, and a control terminal. The switching elements 151 to 154 are MOSFETs, for example. The resistive elements 144 and 155 each have a first terminal and a second terminal. The switching element 151 is an example of the first switch. The switching element 152 is an example of the second switch. The switching element 153 is an example of the third switch. The switching element 154 is an example of the fourth switch.

The input terminal 156 is connected to the first conduction terminal of the switching element 151. The second conduction terminal of the switching element 151 is connected to both the input-side terminal of the inductor 150 and the first conduction terminal of the switching element 152. The output-side terminal of the inductor 150 is connected to both the first conduction terminal of the switching element 153 and the first conduction terminal of the switching element 154. The second conduction terminal of the switching element 153 is connected to the output terminal 157.

The second conduction terminal of the switching element 152 and the second conduction terminal of the switching element 154 are connected to a predetermined node. In the present embodiment, the second conduction terminal of the switching element 152 and the second conduction terminal of the switching element 154 are connected to the first terminal of the resistive element 155. The second terminal of the resistive element 155 is grounded. The output terminal 157 is connected to the first terminal of the resistive element 144. The second terminal of the resistive element 144 is connected to the output terminal of the current limiting circuit 140. The first terminal of the resistive element 155 is an example of the predetermined node.

As described above, the buck-boost control circuit 142 is a control circuit for controlling the buck-boost circuit 141. That is, the buck-boost control circuit 142 is configured to control the buck-boost circuit 141. The buck-boost control circuit 142 is a commercially available buck-boost control integrated circuit (IC), for example. The buck-boost control circuit 142 has first to fourth input terminals, and first to fourth output terminals.

The resistive element 155 detects a current flowing between the buck-boost circuit 141 and ground. The first terminal of the resistive element 155 is connected to the first input terminal of the buck-boost control circuit 142. The second terminal of the resistive element 155 is connected to the second input terminal of the buck-boost control circuit 142. The buck-boost control circuit 142 obtains a current flowing through the resistive element 155 based on the difference between a voltage Va at the first terminal of the resistive element 155 and a voltage Vb at the second terminal of the resistive element 155.

The current detection circuit 143 is configured to detect a current flowing between the output terminal 157 of the buck-boost circuit 141 and the signal generation circuit 90. The first terminal of the resistive element 144 is connected to the third input terminal of the buck-boost control circuit 142. The second terminal of the resistive element 144 is connected to both the fourth input terminal of the buck-boost control circuit 142 and the output terminal of the current limiting circuit 140. The buck-boost control circuit 142 obtains a current flowing through the resistive element 144 based on the difference between a voltage Vr at the first terminal of the resistive element 144 and a voltage Vq at the second terminal of the resistive element 144. The current flowing through the resistive element 144 is equal to the current flowing between the output terminal 157 of the buck-boost circuit 141 and the signal generation circuit 90.

The first output terminal of the buck-boost control circuit 142 is connected to the control terminal of the switching element 151. The second output terminal of the buck-boost control circuit 142 is connected to the control terminal of the switching element 152. The third output terminal of the buck-boost control circuit 142 is connected to the control terminal of the switching element 153. The fourth output terminal of the buck-boost control circuit 142 is connected to the control terminal of the switching element 154.

The switching element 151 changes between an on-state and an off-state in accordance with a control signal C1 outputted from the first output terminal of the buck-boost control circuit 142. The switching element 152 changes between an on-state and an off-state in accordance with a control signal C2 outputted from the second output terminal of the buck-boost control circuit 142. The switching element 153 changes between an on-state and an off-state in accordance with a control signal C3 outputted from the third output terminal of the buck-boost control circuit 142. The switching element 154 changes between an on-state and an off-state in accordance with a control signal C4 outputted from the fourth output terminal of the buck-boost control circuit 142. The on-state is an example of the conductive state. The off-state is an example of the non-conductive state.

The electrical energy storage unit 160 is disposed between the current limiting circuit 140 and the signal generation circuit 90. The electrical energy storage unit 160 includes two capacitors 161 and 162. The capacitors 161 and 162 each have a first terminal and a second terminal. The first terminals of the capacitors 161 and 162 are connected to the output terminal of the current limiting circuit 140, and the second terminals of the capacitors 161 and 162 are grounded. The electrical energy storage unit 160 supplies a current that is used by the signal generation circuit 90.

### Mounting Configurations of Power Supply Circuit 100

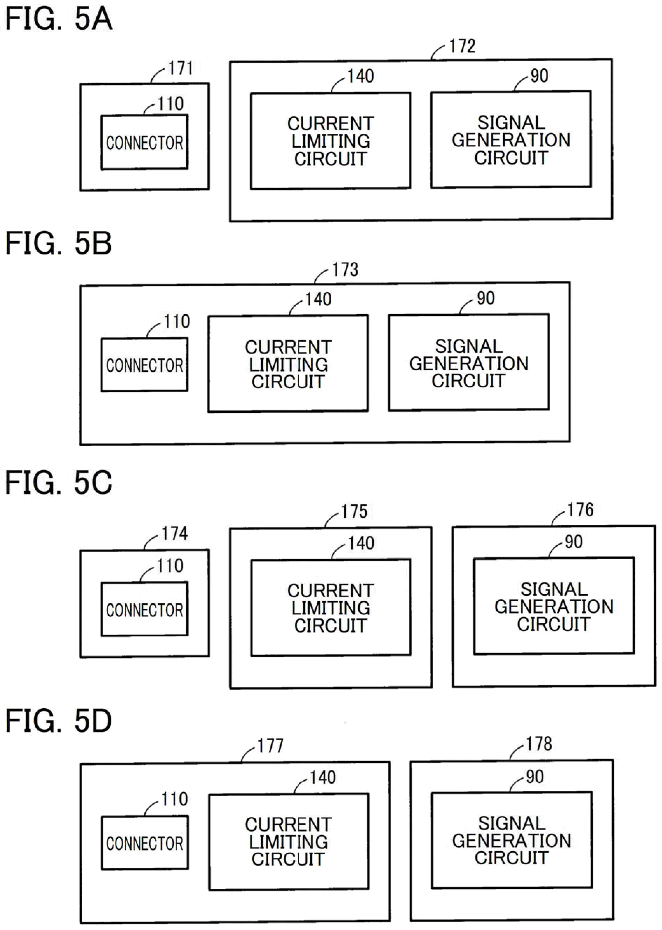

The power supply circuit 100 is mounted on one or more circuit boards. The power supply circuit 100 is mounted as illustrated in Figs. 5A-5D, for example.

In a first mounting configuration illustrated in Fig. 5A, the connector 110 is disposed on a circuit board 171, and the current limiting circuit 140 and the signal generation circuit 90 are disposed on a circuit board 172. That is, in the first mounting configuration, the signal generation circuit 90 and the current limiting circuit 140 are disposed on the same circuit board 172. The connector 110 is disposed on the circuit board 171, which is different from the circuit board 172 on which the current limiting circuit 140 is disposed. In the first mounting configuration, the USB-PD control circuit 120, the load switch 131, and the load switch 132 are each disposed on either the circuit board 171 or the circuit board 172. The electrical energy storage unit 160 is disposed on the circuit board 172.

In a second mounting configuration illustrated in Fig. 5B, the connector 110, the current limiting circuit 140, and the signal generation circuit 90 are disposed on a circuit board 173. That is, in the second mounting configuration, the signal generation circuit 90 and the current limiting circuit 140 are disposed on the same circuit board 173. The connector 110 is disposed on the same circuit board 173 as the current limiting circuit 140. In the second mounting configuration, the USB-PD control circuit 120, the load switch 131, the load switch 132, and the electrical energy storage unit 160 are disposed on the circuit board 173.

In a third mounting configuration illustrated in Fig. 5C, the connector 110 is disposed on a circuit board 174. The current limiting circuit 140 is disposed on a circuit board 175, and the signal generation circuit 90 is disposed on a circuit board 176. That is, in the third mounting configuration, the signal generation circuit 90 and the current limiting circuit 140 are disposed respectively on the circuit boards 176 and 175, which are different from each other. The connector 110 is disposed on the circuit board 174, which is different from the circuit board 175 on which the current limiting circuit 140 is disposed.

In the third mounting configuration, the USB-PD control circuit 120, the load switch 131, and the load switch 132 are each disposed on either the circuit board 174 or the circuit board 175. The electrical energy storage unit 160 is disposed on either the circuit board 175 or the circuit board 176.

In a fourth mounting configuration illustrated in Fig. 5D, the connector 110 and the current limiting circuit 140 are disposed on a circuit board 177. The signal generation circuit 90 is disposed on a circuit board 178. That is, in the fourth mounting configuration, the signal generation circuit 90 and the current limiting circuit 140 are disposed respectively on the circuit boards 178 and 177, which are different from each other. The connector 110 is disposed on the same circuit board 177 as the current limiting circuit 140.

In the fourth mounting configuration, the USB-PD control circuit 120 and the load switches 131 and 132 are disposed on the circuit board 177. The electrical energy storage unit 160 is disposed on either the circuit board 177 or the circuit board 178.

### Operation of Current limiting circuit 140

The voltage of the input terminal 156 of the buck-boost circuit 141 will be referred to as a "voltage V1," while the voltage of the output terminal 157 of the buck-boost circuit 141 will be referred to as a "voltage V2." The voltage V1 is substantially equal to the power supply voltage Ve, which is the input voltage of the power supply circuit 100. The voltage V2 is substantially equal to the supply voltage Vs, which is the output voltage of the power supply circuit 100. The buck-boost circuit 141 performs a step-up operation in which the buck-boost circuit 141 steps up the voltage V1 and outputs the stepped-up voltage as the voltage V2. In addition, the buck-boost circuit 141 performs a step-down operation in which the buck-boost circuit 141 steps down the voltage V1 and outputs the stepped-down voltage as the voltage V2. The voltage V1 is an example of the first voltage. The voltage V2 is an example of the second voltage.

The buck-boost circuit 141 performs the step-up operation or the step-down operation in accordance with the control signals C1 to C4 outputted from the buck-boost control circuit 142. The ratio of the voltage V1 to the voltage V2 of the buck-boost circuit 141 is determined based on the ratio of the resistance values of two resistive elements (not shown) connected to the buck-boost control circuit 142, for example. Hereinafter, a state in which the buck-boost circuit 141 performs the step-up operation will be referred to as a "step-up mode," and a state in which the buck-boost circuit 141 performs the step-down operation will be referred to as a "step-down mode."

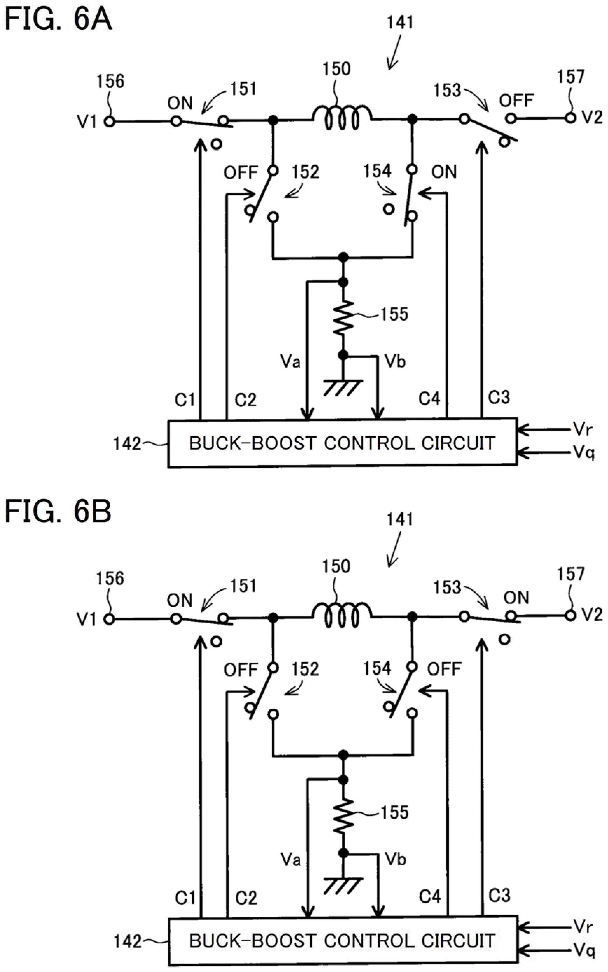

Figs. 6A and 6B illustrate the operation of the current limiting circuit 140 during the step-up mode. In the step-up mode, the buck-boost control circuit 142 outputs the control signal C1 which sets the switching element 151 to the on-state and outputs the control signal C2 which sets the switching element 152 to the off-state. Therefore, in the step-up mode, the switching element 151 is in the on-state and the switching element 152 is in the off-state. Note that the control signal which sets the switching elements to the on-state is one of a high-level signal and a low-level signal, for example. The control signal which sets the switching elements to the off-state is the other of the high-level signal and the low-level signal.

In the step-up mode, the buck-boost control circuit 142 switches the switching elements 153 and 154 between the on-state and the off-state in a complementary manner. More specifically, in the step-up mode, the buck-boost control circuit 142 alternately performs a first control illustrated in Fig. 6A and a second control illustrated in Fig. 6B.

The first control is a control for outputting both the control signal C3 which sets the switching element 153 to the off-state and the control signal C4 which sets the switching element 154 to the on-state. As illustrated in Fig. 6A, when the first control is executed, the switching element 153 is set to the off-state, while the switching element 154 is set to the on-state. At this time, a current flows from the input terminal 156 to ground through the switching element 151, the inductor 150, the switching element 154, and the resistive element 155. The current flowing through the inductor 150 increases, thereby storing electric energy in the inductor 150.

The second control is a control for outputting both the control signal C3 which sets the switching element 153 to the on-state and the control signal C4 which sets the switching element 154 to the off-state. As illustrated in Fig. 6B, when the second control is executed, the switching element 153 is set to the on-state, while the switching element 154 is set to the off-state. At this time, a current flows from the input terminal 156 to the output terminal 157 through the switching element 151, the inductor 150, and the switching element 153. The current flowing through the inductor 150 decreases, and electric energy is released from the inductor 150. The voltage V2 is a voltage obtained by adding a voltage corresponding to the electric energy released from the inductor 150 to the voltage V1.

During execution of the first control, the buck-boost control circuit 142 obtains the current flowing through the resistive element 155. When the current flowing through the resistive element 155 during execution of the first control becomes greater than or equal to a predetermined value, the buck-boost control circuit 142 ends the first control and starts the second control. When a predetermined period of time has elapsed after the start of the first control, the buck-boost control circuit 142 ends the second control and starts the next first control. By the buck-boost control circuit 142 operating as described above, the buck-boost circuit 141 performs the step-up operation.

A dead time may be provided between the period of time during which the first control is executed and the period of time during which the second control is executed. During the dead time, the buck-boost control circuit 142 outputs the control signal C3 which sets the switching element 153 to the off-state and the control signal C4 which sets the switching element 154 to the off-state.

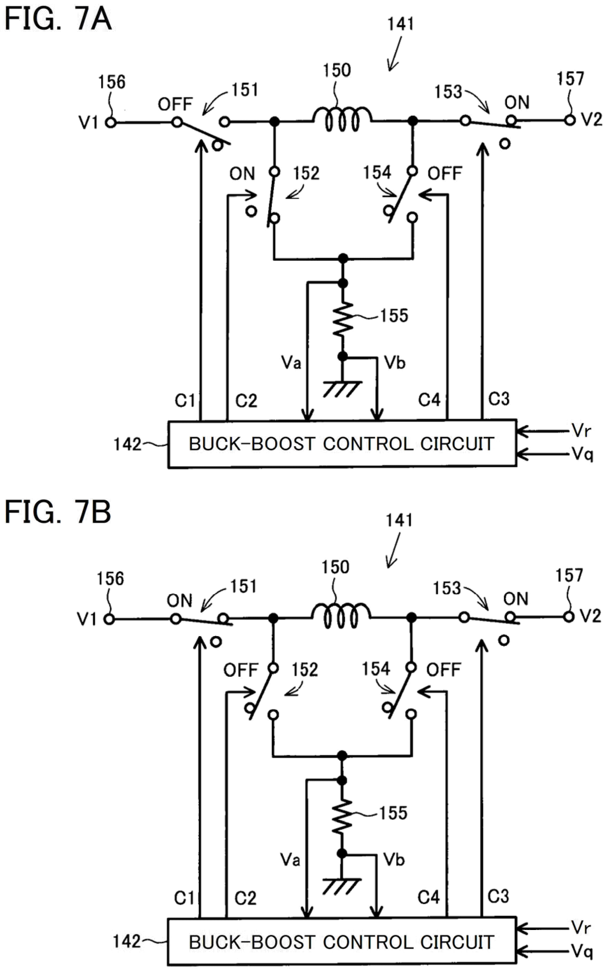

Figs. 7A and 7B illustrate the operation of the current limiting circuit 140 during the step-down mode. In the step-down mode, the buck-boost control circuit 142 outputs both the control signal C3 which sets the switching element 153 to the on-state and the control signal C4 which sets the switching element 154 to the off-state. Therefore, in the step-down mode, the switching element 153 is in the on-state and the switching element 154 is in the off-state.

In the step-down mode, the buck-boost control circuit 142 switches the switching elements 151 and 152 between the on-state and the off-state in a complementary manner. More specifically, in the step-down mode, the buck-boost control circuit 142 alternately performs a third control illustrated in Fig. 7A and a fourth control illustrated in Fig. 7B.

The fourth control is a control for outputting both the control signal C1 which sets the switching element 151 to the on-state and the control signal C2 which sets the switching element 152 to the off-state. As illustrated in Fig. 7B, when the fourth control is executed, the switching element 151 is set to the on-state, while the switching element 152 is set to the off-state. At this time, a current flows from the input terminal 156 to the output terminal 157 through the switching element 151, the inductor 150, and the switching element 153. The current that flows through the inductor 150 increases, thereby storing electric energy in the inductor 150.

The third control is a control for both outputting the control signal C1 which sets the switching element 151 to the off-state and the control signal C2 which sets the switching element 152 to the on-state. As illustrated in Fig. 7A, when the third control is executed, the switching element 151 is set to the off-state, while the switching element 152 is set to the on-state. At this time, a current flows from ground to the output terminal 157 through the resistive element 155, the switching element 152, the inductor 150, and the switching element 153. The current that flows through the inductor 150 decreases, and electric energy is released from the inductor 150.

During execution of the fourth control, the buck-boost control circuit 142 measures the current flowing through the resistive element 144. When the current flowing through the resistive element 144 during execution of the fourth control becomes greater than or equal to a predetermined value, the buck-boost control circuit 142 ends the fourth control and starts the third control. When a predetermined period of time has elapsed after the start of the fourth control, the buck-boost control circuit 142 ends the third control and starts the next fourth control. By the buck-boost control circuit 142 operating as described above, the buck-boost circuit 141 performs the step-down operation.

A dead time may be provided between the period during which the third control is executed and the period during which the fourth control is executed. During the dead time, the buck-boost control circuit 142 outputs the control signal C1 which sets the switching element 151 to the off-state and the control signal C2 which sets the switching element 152 to the off-state.

As described above, the current detection circuit 143 detects the current flowing between the output terminal 157 of the buck-boost circuit 141 and the signal generation circuit 90. When the current detected by the current detection circuit 143 is greater than or equal to a predetermined value, the buck-boost control circuit 142 performs an operation to reduce the current flowing between the output terminal 157 and the signal generation circuit 90. Hereinafter, this operation will be referred to as a "current reduction operation." The current reduction operation is an operation in which the buck-boost control circuit 142 shortens the period of time during which the first control is executed and the period of time during which the fourth control is executed, as compared to when the current detected by the current detection circuit 143 is less than the predetermined value. By this current reduction operation, a current flowing from the output terminal 157 to the signal generation circuit 90 is reduced, and consequently, a current flowing from the connector 110 to the signal generation circuit 90 is reduced.

Alternatively, the current reduction operation during the step-up mode may be an operation in which the buck-boost control circuit 142 limits a period of time during which the switching element 153 is in the off-state to a predetermined length of time or less. In addition, the current reduction operation during the step-down mode may be an operation in which the buck-boost control circuit 142 limits a period of time during which the switching element 151 is in the on-state to a predetermined length of time or less. When the current that flows between the current limiting circuit 140 and the signal generation circuit 90 is greater than or equal to the predetermined value, the buck-boost control circuit 142 performs the current reduction operation. Therefore, by providing the current limiting circuit 140, which includes the buck-boost circuit 141 and the buck-boost control circuit 142, the current flowing from the connector 110 to the signal generation circuit 90 can be limited.

### Technical Advantages of Present Embodiment

As described above, the printing device 1 according to the present embodiment includes the conveying unit 30, the print engine 40, and the signal generation circuit 90. The conveying unit 30 is configured to convey the sheet 8. The print engine 40 is configured to perform printing on the sheet 8 conveyed by the conveying unit 30. The signal generation circuit 90 is configured to generate the drive signal for driving the conveying unit 30 and to generate the drive signal for driving the print engine 40. The printing device 1 further includes the connector 110 and the current limiting circuit 140. The connector 110 is compliant with the USB PD standard. The current limiting circuit 140 is disposed between the connector 110 and the signal generation circuit 90. The current limiting circuit 140 is configured to limit the current flowing from the connector 110 to the signal generation circuit 90.

Therefore, the printing device 1 can reduce the likelihood that more current than can be supplied from the power source connected to the printing device 1 via the connector 110 flows into the printing device 1. Accordingly, ongoing printing is less likely to be interrupted in the printing device 1, which supports the USB PD standard.

More specifically, power sources supporting the USB PD standard have more sensitive overcurrent protection compared to power sources used with known printing devices. Power sources used with known printing devices do not stop power supply to a printing device even when a large inrush current flows at motor startup. However, power sources supporting the USB-PD standard have sensitive overcurrent protection. Consequently, when a large inrush current flows at motor startup, such power sources may stop power supply to a printing device based on determination that overcurrent has occurred. Since the printing device 1 is not provided with a battery, stoppage of the power supply has a direct impact on the current flowing within the printing device 1.

When power supply from the power source is stopped, the printing device 1 may stop operating in an unstable state. This may cause issues such as an inability to continue operation and an inability to complete the operation at an appropriate position. In such cases, the nozzles may be clogged due to the nozzles becoming dry while operation is stopped, or a sheet jam may occur. Therefore, the current limiting circuit 140 is provided in the printing device 1 so that a transient current fluctuation exceeding the rated current is not transmitted to the power source side even if such a current fluctuation occurs. Accordingly, ongoing printing is less likely to be interrupted, and an ongoing operation can be continued. Additionally, the operation can be terminated at the appropriate position.

As illustrated in Figs. 5A and 5B, the signal generation circuit 90 and the current limiting circuit 140 may be disposed on the same circuit board. According to this mounting configuration, the size of the printing device 1 can be reduced. Particularly, as illustrated in Fig. 5B, the connector 110 may be disposed on the same circuit board as the signal generation circuit 90 and the current limiting circuit 140. According to this mounting configuration, the size of the printing device 1 can be further reduced.

As illustrated in Figs. 5C and 5D, the signal generation circuit 90 and the current limiting circuit 140 may be disposed on different circuit boards. This configuration can make the board layout flexible, thereby facilitating the design of the printing device 1. Additionally, since the circuit boards are separate, the circuit boards can be easily designed. Particularly, as illustrated in Fig. 5D, the connector 110 may be disposed on the same circuit board as the current limiting circuit 140. According to this configuration, the size of the printing device 1 can be reduced.

The current limiting circuit 140 includes the buck-boost circuit 141, and the buck-boost control circuit 142, which controls the buck-boost circuit 141. The buck-boost circuit 141 has the input terminal 156 and the output terminal 157. The buck-boost circuit 141 steps up and steps down the voltage V1 applied to the input terminal 156, and outputs the converted voltage from the output terminal 157 as the voltage V2. Accordingly, the current flowing from the connector 110 to the signal generation circuit 90 can be limited by the current limiting circuit 140, which includes the buck-boost circuit 141 and the buck-boost control circuit 142. As a result, in the printing device 1 compliant with the USB PD standard, ongoing printing is less likely to be interrupted.

The buck-boost circuit 141 further includes the inductor 150, the switching elements 151 to 154. The inductor 150 has the input-side terminal and the output-side terminal. The switching element 151 is disposed between the input terminal 156 and the input-side terminal of the inductor 150. The switching element 152 is disposed between the input-side terminal of the inductor 150 and the predetermined node. In the present embodiment, the switching element 152 is disposed between the input-side terminal of the inductor 150 and the first terminal of the resistive element 155. The switching element 153 is disposed between the output terminal 157 and the output-side terminal of the inductor 150. The switching element 154 is disposed between the output-side terminal of the inductor 150 and the predetermined node. In the present embodiment, the switching element 154 is disposed between the output-side terminal of the inductor 150 and the first terminal of the resistive element 155.

The buck-boost control circuit 142 sets the switching element 151 to the on-state and sets the switching element 152 to the off-state during the step-up mode. The buck-boost control circuit 142 switches the switching elements 153 and 154 between the on-state and the off-state in a complementary manner during the step-up mode. The buck-boost control circuit 142 sets the switching element 153 to the on-state and sets the switching element 154 to the off-state during the step-down mode. The buck-boost control circuit 142 switches the switching elements 151 and 152 between the on-state and the off-state in a complementary manner during the step-down mode. Accordingly, the voltage V1 can be stepped up or stepped down to the voltage V2 by the buck-boost circuit 141 and the buck-boost control circuit 142.

The current limiting circuit 140 further includes the current detection circuit 143, which detects the current flowing between the output terminal 157 of the buck-boost circuit 141 and the signal generation circuit 90. When the current detected by the current detection circuit 143 is greater than or equal to the predetermined value, the buck-boost control circuit 142 performs the current reduction operation to reduce the current flowing between the output terminal 157 and the signal generation circuit 90. Therefore, the printing device 1 can limit the current flowing between the connector 110 and the signal generation circuit 90 while stepping up or stepping down the voltage V1 to the voltage V2.

The printing device 1 further includes the load switches 131 and 132, and the USB-PD control circuit 120. The load switches 131 and 132 are disposed between the connector 110 and the current limiting circuit 140. Based on the voltage applied to the USB-PD control circuit 120 via the connector 110, the USB-PD control circuit 120 performs the voltage negotiation with the external power source connected to the USB-PD control circuit 120 via the connector 110. The voltage negotiation is a negotiation compliant with the USB PD standard. The USB-PD control circuit 120 controls the load switches 131 and 132 to be in a non-conductive state (the off-state) until the voltage negotiation is completed.

Accordingly, the printing device 1 can receive a voltage compliant with the USB PD standard from the external power source. Additionally, voltages unsuitable for the signal generation circuit 90 are not applied before the voltage negotiation has been completed.

The printing device 1 further includes the electrical energy storage unit 160 between the current limiting circuit 140 and the signal generation circuit 90. Therefore, a current can be supplied to the signal generation circuit 90 from the electrical energy storage unit 160. In particular, the electrical energy storage unit 160 includes the capacitors 161 and 162. Hence, a current can be supplied to the signal generation circuit 90 from the capacitors 161 and 162, which have a small size.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below:

### First Variation

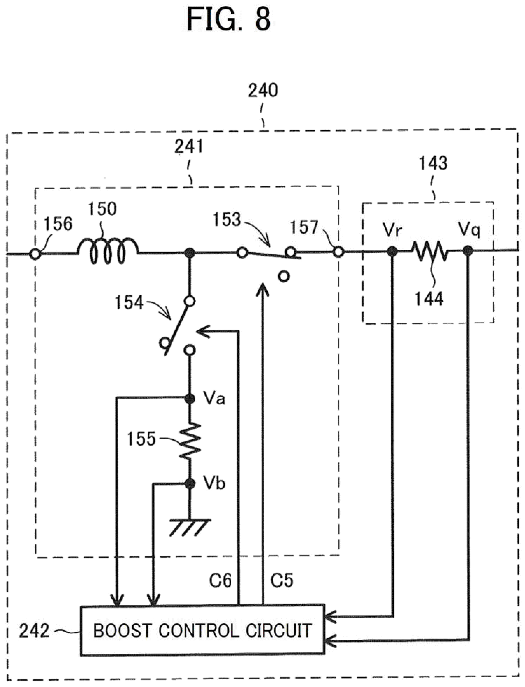

The printing device 1 according to the embodiment described above can be modified in various ways. For example, a printing device according to a first variation is obtained by replacing the current limiting circuit 140 of the printing device 1 with a current limiting circuit 240 illustrated in Fig. 8. In the current limiting circuit 240, the buck-boost circuit 141 of the current limiting circuit 140 is replaced by a boost circuit 241, and the buck-boost control circuit 142 of the current limiting circuit 140 is replaced by a boost control circuit 242. Differences from the above-described embodiment will be described below.

The boost circuit 241 is obtained by removing the switching elements 151 and 152 from the buck-boost circuit 141. In the boost circuit 241, the input terminal 156 is connected to the input-side terminal of the inductor 150.

The boost control circuit 242 is a control circuit for controlling the boost circuit 241. That is, the boost control circuit 242 is configured to control the boost circuit 241. The boost control circuit 242 is a commercially available boost control IC, for example. The boost control circuit 242 has first to fourth input terminals, a first output terminal, and a second output terminal.

The resistive element 155 detects a current flowing from the boost circuit 241 to ground. The first terminal of the resistive element 155 is connected to the first input terminal of the boost control circuit 242. The second terminal of the resistive element 155 is connected to the second input terminal of the boost control circuit 242. The boost control circuit 242 obtains the current that flows through the resistive element 155 based on the difference between the voltage Va and the voltage Vb.

The current detection circuit 143 detects a current flowing between the output terminal 157 of the boost circuit 241 and the signal generation circuit 90. The first terminal of the resistive element 144 is connected to the third input terminal of the boost control circuit 242. The second terminal of the resistive element 144 is connected to both the fourth input terminal of the boost control circuit 242 and the output terminal of the current limiting circuit 240. The boost control circuit 242 obtains the current flowing through the resistive element 144 based on the difference between the voltage Vr and the voltage Vq. The current flowing through the resistive element 144 is equal to the current flowing between the output terminal 157 of the boost circuit 241 and the signal generation circuit 90.

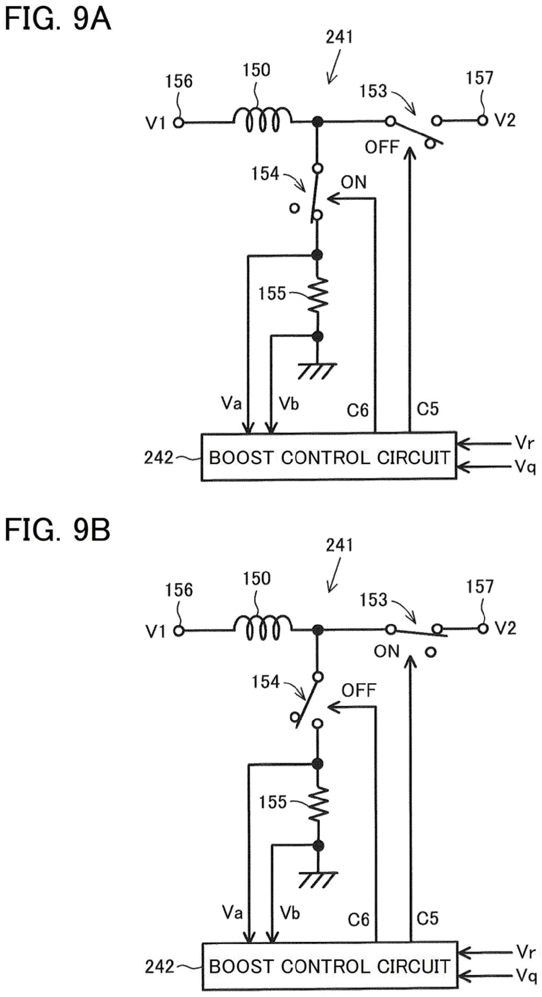

The first output terminal of the boost control circuit 242 is connected to the control terminal of the switching element 153. The second output terminal of the boost control circuit 242 is connected to the control terminal of the switching element 154. As illustrated in Figs. 9A and 9B, the switching element 153 changes between the on-state and the off-state in accordance with a control signal C5 outputted from the first output terminal of the boost control circuit 242, and the switching element 154 changes between the on-state and the off-state in accordance with a control signal C6 outputted from the second output terminal of the boost control circuit 242. The switching element 153 of the first variation is an example of the first switch. The switching element 154 of the first variation is an example of the second switch.

The operation of the boost circuit 241 and the boost control circuit 242 is the same as the operation of the buck-boost circuit 141 and the buck-boost control circuit 142 during the step-up mode. Therefore, descriptions of the operation of the boost circuit 241 and the boost control circuit 242 will be omitted.

The current reduction operation of the boost control circuit 242 may be an operation in which the boost control circuit 242 limits a period of time during which the switching element 153 is in the off-state to a predetermined length of time or less. When the current flowing between the output terminal 157 of the boost circuit 241 and the signal generation circuit 90 is greater than or equal to a predetermined value, the boost control circuit 242 performs the current reduction operation. Therefore, by providing the current limiting circuit 240 including the boost circuit 241 and the boost control circuit 242, the current flowing from the connector 110 to the signal generation circuit 90 can be limited.

### Technical Advantages of First Variation

In the printing device according to the first variation, the current limiting circuit 240 includes the boost circuit 241, and the boost control circuit 242, which controls the boost circuit 241. The boost circuit 241 has the input terminal 156 and the output terminal 157. The boost circuit 241 steps up the voltage V1 inputted from the input terminal 156 and outputs the stepped-up voltage from the output terminal 157 as the voltage V2. Accordingly, the current flowing from the connector 110 to the signal generation circuit 90 can be limited by the current limiting circuit 240 including the boost circuit 241 and the boost control circuit 242. As a result, in the printing device compliant with the USB PD standard, ongoing printing is less likely to be interrupted.

The boost circuit 241 further includes the inductor 150 and the switching elements 153 and 154. The inductor 150 has the input-side terminal and the output-side terminal. The input-side terminal of the inductor 150 is connected to the input terminal 156. The switching element 153 is disposed between the output terminal 157 and the output-side terminal of the inductor 150. The switching element 154 is disposed between the output-side terminal of the inductor 150 and a predetermined node. In the present variation, the switching element 154 is disposed between the output-side terminal of the inductor 150 and the first terminal of the resistive element 155.

The boost control circuit 242 switches the switching elements 153 and 154 between the conductive state (the on-state) and the non-conductive state (the off-state) in a complementary manner. Accordingly, the voltage V1 can be stepped up to the voltage V2 by the boost circuit 241 and the boost control circuit 242.

The current limiting circuit 240 further includes the current detection circuit 143, which detects the current flowing between the output terminal 157 of the boost circuit 241 and the signal generation circuit 90. When the current detected by the current detection circuit 143 is greater than or equal to the predetermined value, the boost control circuit 242 performs the current reduction operation to reduce the current flowing between the output terminal 157 and the signal generation circuit 90. Therefore, the printing device 1 can limit the current flowing from the connector 110 to the signal generation circuit 90 while stepping up the voltage V1 to the voltage V2.

### Second Variation

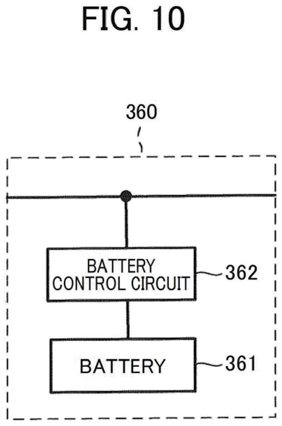

A printing device according to a second variation is obtained by replacing the electrical energy storage unit 160 of the printing device 1 with an electrical energy storage unit 360 illustrated in Fig. 10. The electrical energy storage unit 360 includes a battery 361 and a battery control circuit 362. The battery control circuit 362 is connected to wiring that connects the current limiting circuit 140 and the signal generation circuit 90 to each other. The battery control circuit 362 charges the battery 361 using the current flowing between the current limiting circuit 140 and the signal generation circuit 90. The battery control circuit 362 supplies a current used by the signal generation circuit 90 by discharging the battery 361.

### Technical Advantages of Second Variation

The electrical energy storage unit 360 of the printing device according to the second variation includes the battery 361. By providing the electrical energy storage unit 360 including the battery 361, the current used by the signal generation circuit 90 can be supplied from the battery 361.

### Other Variations

In the printing device 1 according to the embodiment, printing is performed on one side of the sheet 8 according to an inkjet method. Printing devices according to a variation may have a function for performing printing on both sides of the sheet 8. Printing devices according to another variation may perform printing on a printing medium other than the sheet 8, such as a film. Printing device according to another variation may perform printing on a printing medium according to a method other than the inkjet method, such as thermal printing method or laser printing method. Printing devices according to another variation may have functions such as a facsimile function or a scanning function.

## Claims

1. A printing device (1) comprising:
a conveying unit (30) configured to convey a printing medium (8);
a print engine (40) configured to print on the printing medium (8) conveyed by the conveying unit (30);
a signal generation circuit (90) configured to generate a drive signal for driving the conveying unit (30) and generate a drive signal for driving the print engine (40);
a connector (110) compliant with a Universal Serial Bus Power Delivery (USB-PD) standard; and
a current limiting circuit (140, 240) disposed between the connector (110) and the signal generation circuit (90), the current limiting circuit (140, 240) being configured to limit a current flowing from the connector (110) to the signal generation circuit (90).

2. The printing device (1) according to claim 1,
wherein the signal generation circuit (90) and the current limiting circuit (140, 240) are disposed on the same circuit board (172, 173).

3. The printing device (1) according to claim 2,
wherein the connector (110) is disposed on the same circuit board (173) as the signal generation circuit (90) and the current limiting circuit (140, 240).

4. The printing device (1) according to claim 1,
wherein the signal generation circuit (90) and the current limiting circuit (140, 240) are disposed on different circuit boards (175, 176, 177, 178).

5. The printing device (1) according to claim 1 or 4,
wherein the connector (110) is disposed on the same circuit board (177) as the current limiting circuit (140, 240).

6. The printing device (1) according to any one of claims 1 to 5,
wherein the current limiting circuit (140) includes:
a buck-boost circuit (141) having an input terminal (156) and an output terminal (157), the buck-boost circuit (141) being configured to:
step up a first voltage (V1) applied to the input terminal (156) and output the stepped-up first voltage from the output terminal (157) as a second voltage (V2); and
step down the first voltage (V1) applied to the input terminal (156) and output the stepped-down first voltage from the output terminal (157) as the second voltage (V2); and
a buck-boost control circuit (142) configured to control the buck-boost circuit (141).

7. The printing device (1) according to claim 6,
wherein the buck-boost circuit (141) includes:
an inductor (150) having an input-side terminal and an output-side terminal;
a first switch (151) disposed between the input terminal (156) and the input-side terminal;
a second switch (152) disposed between the input-side terminal and a predetermined node;
a third switch (153) disposed between the output terminal (157) and the output-side terminal; and
a fourth switch (154) disposed between the output-side terminal and the predetermined node,
wherein the buck-boost control circuit (142) is configured to perform the following to step up the first voltage (V1):
setting the first switch (151) to a conductive state;
setting the second switch (152) to a non-conductive state; and
switching the third switch (153) and the fourth switch (154) between a conductive state and a non-conductive state in a complementary manner, and
wherein the buck-boost control circuit (142) is configured to perform the following to step down the first voltage (V1):
setting the third switch (153) to a conductive state;
setting the fourth switch (154) to a non-conductive state; and
switching the first switch (151) and the second switch (152) between a conductive state and a non-conductive state in a complementary manner.

8. The printing device (1) according to claim 6 or 7,
wherein the current limiting circuit (140) further includes a current detection circuit (143) configured to detect a current flowing between the output terminal (157) and the signal generation circuit (90), and
wherein the buck-boost control circuit (142) is configured to, when the current detected by the current detection circuit (143) is greater than or equal to a predetermined value, perform an operation to reduce the current flowing between the output terminal (157) and the signal generation circuit (90).

9. The printing device according to any one of claims 1 to 5,
wherein the current limiting circuit (240) includes:
a boost circuit (241) having an input terminal (156) and an output terminal (157), the boost circuit (241) being configured to step up a first voltage (V1) applied to the input terminal (156) and output the stepped-up first voltage from the output terminal (157) as a second voltage (V2); and
a boost control circuit (242) configured to control the boost circuit (241).

10. The printing device according to claim 9,
wherein the boost circuit (241) includes:
an inductor (150) having an input-side terminal and an output-side terminal, the input-side terminal being connected to the input terminal (156);
a first switch (153) disposed between the output terminal (157) and the output-side terminal; and
a second switch (154) disposed between the output-side terminal and a predetermined node (the first terminal of 155), and
wherein the boost circuit (241) is configured to switch the first switch (153) and the second switch (154) between a conductive state and a non-conductive state in a complementary manner to step up the first voltage (V1).

11. The printing device according to claim 9 or 10,
wherein the current limiting circuit (240) further includes a current detection circuit (143) configured to detect a current flowing between the output terminal (157) and the signal generation circuit (90), and
wherein the boost control circuit (242) is configured to, when the current detected by the current detection circuit (143) is greater than or equal to a predetermined value, perform an operation to reduce the current flowing between the output terminal (157) and the signal generation circuit (90).

12. The printing device (1) according to any one of claims 1 to 11, further comprising:
a load switch (131, 132) disposed between the connector (110) and the current limiting circuit (140, 240); and
a USB-PD control circuit (120) configured to:
perform, based on a voltage applied to the USB-PD control circuit (120) via the connector (110), a voltage negotiation compliant with the USB-PD standard with a power source connected to the USB-PD control circuit (120) via the connector (110); and
control the load switch (131, 132) to be in a non-conductive state until the voltage negotiation is completed.

13. The printing device (1) according to any one of claims 1 to 12, further comprising:
an electrical energy storage unit (160, 360) disposed between the current limiting circuit (140, 240) and the signal generation circuit (90).

14. The printing device (1) according to claim 13,
wherein the electrical energy storage unit (160) includes a capacitor (161, 162).

15. The printing device according to claim 13,
wherein the electrical energy storage unit (360) includes a battery (361).
